# EUROPÄISCHE PATENTANMELDUNG

(11) **EP 4 342 703 A1**
(43) Veröffentlichungstag der Anmeldung: **27.03.2024**
(21) Anmeldenummer: 23194030.5
(22) Anmeldetag: 29.08.2023
(51) Int. Cl.: B60K 1/04, B62D 21/20, B60R 9/00

(54) **NUTZFAHRZEUG**

(30) Priorität: 01.09.2022 DE 102022122180
(71) Anmelder: Fahrzeugwerk Bernard Krone GmbH & Co. KG, 49757 Werlte (DE)
(72) Erfinder: Baufeld, Torsten, 26871 Papenburg (DE)
(74) Vertreter: Hüseman, Julian

(57) **Zusammenfassung**

Die Erfindung betrifft ein Nutzfahrzeug mit einer Ladefläche, einem an eine Aufstandsebene angrenzenden Fahrwerk, einer zur Kopplung des Nutzfahrzeuges mit einem Zugfahrzeug ausgebildeten Koppeleinrichtung (10), einem Fahrzeugrahmen (12), der zumindest einen sich in eine Längsrichtung (LR) erstreckenden Längsträger (14, 15) aufweist, und einer ersten, einen Stauraum ausbildenden Behältereinheit (18). Diese ist in einem Zwischenraum, der sich zwischen der Ladefläche und der Aufstandsebene und in die Längsrichtung versetzt zum Fahrwerk erstreckt, am Fahrzeugrahmen (12) angeordnet. Erfindungsgemäß weist das Nutzfahrzeug zumindest eine zweite, einen Stauraum ausbildende Behältereinheit (20) auf, die im Zwischenraum am Fahrzeugrahmen (12) angeordnet ist und zumindest in einem Querschnitt von der ersten Behältereinheit (18) beabstandet ist.

## Beschreibung

Die Erfindung betrifft ein Nutzfahrzeug. Das Nutzfahrzeug weist eine Ladefläche auf bzw. bildet eine Ladefläche aus. Außerdem umfasst das Nutzfahrzeug ein an eine Aufstandsebene angrenzendes Fahrwerk und eine zur Kopplung des Nutzfahrzeuges mit einem Zugfahrzeug ausgebildete Koppeleinrichtung. Ferner umfasst das Nutzfahrzeug einen Fahrzeugrahmen. Der Fahrzeugrahmen weist zumindest einen Längsträger auf, die sich in einer Längsrichtung erstreckt. Das Nutzfahrzeug umfasst weiterhin eine erste Behältereinheit, die einen Stauraum ausbildet. Die erste Behältereinheit ist in einem Zwischenraum am Fahrzeugrahmen angeordnet. Der Zwischenraum erstreckt sich zwischen der Ladefläche und der Aufstandsebene und in die Längsrichtung versetzt zum Fahrwerk.

Ein derartiges Nutzfahrzeug ist bekannt. Typischerweise wird die erste Behältereinheit bisher zur Verstauung von Palletten oder Werkzeug genutzt. Zur Bereitstellung eines möglichst großen Stauraumes erstreckt sich die erste Behältereinheit über einen Großteil der Breite des Nutzfahrzeuges und ist unmittelbar an den Längsträgern befestigt.

Nachteilig an dem bekannten Nutzfahrzeug ist eine mangelnde Toleranz von Torsionen des Fahrzeugrahmens. Im Betrieb nicht ungewöhnliche Torsionen und damit einhergehende Lageveränderungen der Längsträger relativ zueinander führen regelmäßig zu Beschädigungen der ersten Behältereinheit bzw. ihrer Befestigung am Fahrzeugrahmen. Insbesondere führen die Torsionen zu einer plastischen Verformung der ersten Behältereinheit und/oder zu ihrem teilweisen Abreißen von dem Fahrzeugrahmen. Vor diesem Hintergrund ist die erste Behältereinheit nicht zur Aufnahme von Batterien zur Bereitstellung einer möglichst großen Menge elektrischer Energie geeignet.

Aufgabe der vorliegenden Erfindung ist die Bereitstellung eines gattungsgemäßen Nutzfahrzeuges, durch das die vorgenannten Nachteile bei Erhalt eines möglichst großen Gesamtstauraumes zu vermeiden sind und das mit der ersten Behältereinheit insbesondere zur Aufnahme von Batterien geeignet ist.

Erfindungsgemäß wird die Aufgabe dadurch gelöst, dass das Nutzfahrzeug zumindest eine zweite Behältereinheit umfasst, die einen Stauraum ausbildet und im Zwischenraum am Fahrzeugrahmen angeordnet ist. Die zweite Behältereinheit ist dabei zumindest in einem Querschnitt von der ersten Behältereinheit beabstandet angeordnet.

Bei dem erfindungsgemäßen Nutzfahrzeug handelt es sich insbesondere um einen Anhänger, bevorzugt einen Sattelauflieger, einen Zentralachsanhänger oder einen Deichselanhänger. Entsprechend umfasst die Koppeleinrichtung bevorzugt einen Königszapfen oder eine Zugöse. Bei der Ladefläche handelt es sich insbesondere um eine von der Aufstandsebene abgewandte Oberfläche, auf der Ladegut wie beispielsweise Palletten oder Container anzuordnen sind. In der Aufstandsebene ist im Betrieb des Nutzungsfahrzeuges insbesondere die Straßenoberfläche angeordnet. Die Ladefläche erstreckt sich bevorzugt parallel zur Aufstandsebene.

Das Fahrwerk umfasst zumindest eine, insbesondere mehrere Fahrwerkseinheiten aus einer Achse und zumindest zwei Rädern, die mit ihrer von der Ladefläche abgewandten Seite an die Aufstandsebene angrenzen. Die vom Fahrzeugrahmen umfassten Längsträger erstrecken sich insbesondere zumindest im Wesentlichen über die gesamte Länge des Nutzfahrzeuges in die Längsrichtung. Bei den Längsträgern handelt es sich bevorzugt um H-Profile, deren mittlerer Schenkel sich im Querschnitt rechtwinklig zur Aufstandsebene erstreckt. Es sind jedoch auch andere Profiltypen möglich. Die Längsrichtung entspricht im Betrieb vorzugsweise der Fahrtrichtung. Eine Querrichtung ist rechtwinklig zur Längsrichtung und parallel zur Aufstandsebene angeordnet. Optional umfasst der Fahrzeugrahmen neben den Längsträgern auch sich in die Querrichtung erstreckende Querträger.

Der Zwischenraum, in dem die erste und zweite Behältereinheit angeordnet ist, liegt im Betrieb zwischen dem Fahrwerk und der Zugmaschine bzw., etwa im Falle eines Drehschemel-Anhängers, zwischen unterschiedlichen Fahrwerkseinheiten des Fahrwerkes. Zwischen der Ladefläche und der Aufstandsebene liegt der Zwischenraum insofern als er seitlich durch sich in die Längsrichtung und rechtwinklig zur Aufstandsebene erstreckende Ebenen begrenzt ist, die die Ladefläche seitlich berühren.

Bei dem Zwischenraum handelt es sich im Gegensatz zu den Stauräumen um einen Raum, der keine gegenständlichen, sondern nur gedachte Grenzen hat.

Bei den Behältereinheiten handelt es sich insbesondere um Kästen oder Boxen, die vorzugsweise aus einem Metall ausgebildet sind. Die Behältereinheiten umschließen den jeweiligen Stauraum im Betrieb bevorzugt vollständig und weisen dazu zumindest vorwiegend geschlossene Wandungen auf. Der Gesamtstauraum wird durch die einzelnen Stauräume gebildet. Aufgrund der Beabstandung der zweiten Behältereinheit von der ersten Behältereinheit existiert insbesondere keine Wandung, die sowohl den von der ersten Behältereinheit ausgebildeten Stauraum als auch den von der zweiten Behältereinheit ausgebildeten Stauraum begrenzt.

Die zweite Behältereinheit ist von der ersten Behältereinheit in dem Querschnitt insbesondere in die Querrichtung beabstandet und insbesondere ebenso weit wie die erste Behältereinheit von der Aufstandsebene und/oder von der Ladefläche beabstandet. Die zweite Behältereinheit ist vorzugsweise insofern von der ersten Behältereinheit entkoppelt, als keine unmittelbare mechanische Verbindung zwischen den beiden Behältereinheiten gegeben ist. Besonders bevorzugt ist sowohl die erste Behältereinheit als auch die zweite Behältereinheit einzig am Fahrzeugrahmen befestigt. Dadurch werden Kräfte auf und von den Behältereinheiten einzig durch den Fahrzeugrahmen übertragen. Das führt dazu, dass sich weiterhin ein beinahe beliebig großer Teil des Zwischenraumes als Gesamtstauraum nutzen lässt, ohne dass im Falle einer Torsion des Fahrzeugrahmens Beschädigungen auftreten, die Reparaturen erforderten. Durch die Beabstandung der einzelnen Behältereinheiten werden zwischen ihnen keine rechtwinklig zur Aufstandsebene ausgerichteten Scherkräfte übertragen und können sie der Torsion des Fahrzeugrahmens einzeln durch eine elastische Verformung nachgeben. Das führt unter anderem dazu, dass die Behältereinheiten zur Aufnahme von Batterien ebenso wie zum Transport von Werkzeug oder von Ladegut geeignet sind. Die Batterien dienen bevorzugt als Energiequelle für nutzfahrzeugeigene Verbraucher wie zum Beispiel ein Kühlaggregat oder ein Fahrantriebsmotor.

Bevorzugt weist der Fahrzeugrahmen zumindest zwei sich in die Längsrichtung erstreckende Längsträger auf, die in die Querrichtung voneinander beabstandet sind. Hierbei handelt es sich um einen besonders zuverlässigen Aufbau des Fahrzeugrahmens, der Bauraumvorteile für mittig angeordnete Behältereinheiten bietet. Alternativ weist der Fahrzeugrahmen genau einen Längsträger auf, wobei der Fahrzeugrahmen insbesondere als Zentralrohrrahmen ausgebildet ist. Ein solcher Fahrzeugrahmen bietet beispielsweise Bauraumvorteile für das Fahrwerk und seitliche Behältereinheiten.

Vorzugsweise ist die erste Behältereinheit, insbesondere vollständig, einerseits einer ersten Längstrennebene angeordnet und die zweite Behältereinheit, insbesondere vollständig, andererseits der ersten Längstrennebene angeordnet. Die erste Längstrennebene erstreckt sich dabei rechtwinklig zur Aufstandsebene und in die Länksrichtung. Durch diese Anordnung der Behältereinheiten im Verhältnis zueinander wird zuverlässig ein Kontakt zwischen ihnen, selbst im Falle einer weitgehenden Torsion des Fahrzeugrahmens vermieden, der das Risiko von Beschädigungen erhöhte.

Bevorzugt ist die zweite Behältereinheit zwischen der ersten Längstrennebene und einer zweiten Längstrennebene angeordnet. Die zweite Längstrennebene erstreckt sich parallel zur ersten Längstrennebene. Sowohl die erste Längstrennebene als auch die zweite Längstrennebene erstreckt sich zwischen den beiden Längsträgern hindurch. Das bedeutet, dass die erste Behältereinheit in einer Draufsicht auf dem Fahrzeugrahmen und die zweite Behältereinheit zwischen den Längsträgern angeordnet ist. Die erste Behältereinheit ist dagegen insbesondere zwischen einem der Längsträger, bevorzugt dem ersten der Längsträger, und der Aufstandsebene angeordnet. Durch die derartige Positionierung der Behältereinheiten relativ zueinander und der Begrenzung der in die Querrichtung gemessenen Breite der zweiten Behältereinheit tolerieren die Behältereinheiten besonders starke Torsionen.

Vorzugsweise weist der Fahrzeugrahmen zumindest ein Innentragelement auf, an dem zumindest die zweite Behältereinheit befestigt ist. Das Innentragelement ist einenends an einem ersten der beiden Längsträger und anderenends an einem zweiten der beiden Längsträger angeordnet. Das Innentragelement ist bevorzugt ein- oder mehrteilig ausgebildet. In einem Längsschnitt des Nutzfahrzeuges ist das Innentragelement bevorzugt C-förmig ausgebildet. Das Innentragelement ist ebenso wie der weitere Fahrzeugrahmen, abgesehen von den in Betrieb unvermeidlich auftretenden Verformungen wie der Torsion, starr, etwa aus einem Metall, ausgebildet.

Durch das Innentragelement lässt sich eine zuverlässige Montage der zweiten Behältereinheit am Fahrzeugrahmen erreichen.

Bevorzugt ist an dem Innentragelement auch die erste Behältereinheit, die sich in die Querrichtung insbesondere über das Innentragelement hinaus erstreckt, insbesondere zumindest teilweise, befestigt. Hierdurch kann das Innentragelement selbst zur Zuverlässigkeit der Montage der ersten (äußeren) Behältereinheit beitragen.

Vorzugsweise weist der Fahrzeugrahmen zumindest ein an dem ersten Längsträger angeordnetes und sich vom zweiten Längsträger wegerstreckendes Außentragelement auf. An dem Außentragelement ist die erste Behältereinheit, insbesondere zumindest teilweise, befestigt. Das Außentragelement ragt von dem ersten Längsträger insbesondere in die oder entgegen die Querrichtung hervor. Durch das Außentragelement lässt sich die erste Behältereinheit auch bei einer geringeren Breite derer zuverlässig am Fahrzeugrahmen festlegen. Insbesondere grenzt die Behältereinheit dabei unmittelbar von unten an den ersten Längsträger an, bevorzugt ohne unmittelbar damit verbunden zu sein.

Die nachfolgenden Ausführungen betreffend ein "Tragelement" sind auf das Außentragelement und/oder das Innentragelement bezogen zu verstehen. Besonders bevorzugt erstreckt sich das Tragelement zumindest überwiegend flächig rechtwinklig zur Aufstandsebene und in die Querrichtung. Das bedeutet, dass die Haupterstreckungsrichtungen des Tragelements insbesondere im Falle seiner Ausbildung aus einem Blech, jeweils rechtwinklig zur Längsrichtung ausgerichtet sind. Dadurch ist der Fahrzeugrahmen zur sicheren Montage der Behältereinheiten auch im Falle eines großen Gewichts derer geeignet und wird gleichzeitig eine höhere Versteifung des Fahrzeugrahmens entgegen die Torsion erreicht. Das Außentragelement ist in einer Ansicht in die Längsrichtung zur optimalen Kraftableitung bevorzugt L-förmig oder dreieckig ausgebildet.

Bevorzugt ist das Tragelement zumindest hauptsächlich oder ausschließlich an einem sich flächig rechtwinklig zur Aufstandsebene und in die Längsrichtung erstreckenden Teil des zumindest einen Längsträgers angeordnet. Das Tragelement ist insbesondere mit dem Längsträger verschweißt oder anderweitig verbunden. Durch diese Ausbildung der Verbindung zwischen dem Tragelement und dem Längsträger wird eine zuverlässige Übertragung von Kraft auf den Fahrzeugrahmen erreicht.

Vorzugsweise weist das Tragelement zumindest eine durchgehende Bohrung auf. Die Bohrung erstreckt sich bevorzugt in die Längsrichtung oder rechtwinklig zur Aufstandsebene. Die Bohrung ist der Aufstandsebene insbesondere näher als die Längsträger. Die erste bzw. zweite Behältereinheit ist mittels eines durch die Bohrung erreichenden Befestigungselements am Fahrzeugrahmen befestigt. Bei dem Befestigungselement handelt es sich insbesondere um eine Schraube oder Niete. Aufgrund der derart ausgerichteten Bohrung liegt die Behältereinheit mit einer Fläche am Fahrzeugrahmen an, die sich rechtwinklig zur Längsrichtung erstreckt. Durch die mit dem Befestigungselement herzustellende Flächenpressung sind durch eine Torsion des Fahrzeugrahmens ausgelöste Kräfte besonders zuverlässig auf die Behältereinheit zu übertragen.

Bevorzugt weist der Fahrzeugrahmen zumindest ein Stützelement auf, das das Tragelement mit dem zumindest einen Längsträger verbindet. Das Stützelement erstreckt sich im Wesentlichen flächig parallel zur Aufstandsebene. In einer Draufsicht ist das Stützelement besonders bevorzugt im wesentlichen L-förmig oder dreieckig und insbesondere als Knotenblech ausgebildet. Das Stützelement ist insbesondere mit dem Tragelement und dem Längsträger verschweißt und dient einer Übertragung von in die Längsrichtung wirkenden Kräften. Durch das Stützelement wird das Risiko von Beschädigungen, insbesondere plastischen Verformungen, des Nutzfahrzeugs weiter reduziert.

Vorzugsweise weist der Fahrzeugrahmen mindestens zwei, bevorzugt mindestens drei, besonders bevorzugt mindestens vier, in die Längsrichtung versetzt angeordnete Innentragelemente und/oder Außentragelemente zur Befestigung der ersten bzw. der zweiten Behältereinheit auf. Pro Tragelement weist die jeweilige Behältereinheit bevorzugt eine sich rechtwinklig zur Längsrichtung erstreckende Querwandung auf. Durch die Querwandungen wird der Stauraum besonders bevorzugt in bis zu drei in die Längsrichtung hintereinander angeordnete Stauraumsektionen unterteilt. Insbesondere hat jede Sektion einen sich parallel zur Aufstandsebene erstreckenden Zwischenboden zur Unterteilung der jeweiligen Stauraumsektion in einen oberen und unteren Abschnitt, die optimal für Nutzfahrzeuge verwendbare Batterien verwendbar sind.

Vorzugsweise weist das Nutzfahrzeug eine dritte Behältereinheit auf. Die dritte Behältereinheit ist insbesondere bezogen auf eine Längsmittelebene spiegelsymmetrisch zur ersten Behältereinheit angeordnet und/oder ausgebildet. Die Längsmittelebene erstreckt sich rechtwinklig zur Aufstandsebene und in die Längsrichtung und schneidet die Ladefläche mittig. Die dritte Behältereinheit ist insbesondere zwischen dem zweiten Längsträger und der Aufstandsebene angeordnet. Die zweite Behältereinheit und/oder der Fahrzeugrahmen sind/ist bevorzugt spiegelsymmetrisch zur Längsmittelebene ausgebildet. Durch diese bevorzugte Ausbildung des erfindungsgemäßen Nutzfahrzeuges lassen sich die vorstehend beschriebenen Vorteile bei einem größtmöglichen Gesamtstauraum erreichen. Es hat sich gezeigt, das eine Aufteilung des Gesamtstauraumes auf drei Behältereinheiten den bestmöglichen Kompromiss zwischen Zuverlässigkeit des Nutzfahrzeuges, Kostenaufwand und Gesamtstauraum darstellt.

Vorzugsweise sind die Behältereinheiten quaderförmig ausgebildet. Besonders bevorzugt ist ihre in die Längsrichtung bemessene Länge mindestens so groß, insbesondere mindestens doppelt so groß, optimalerweise mindestens dreifach so groß, wie ihre in die Querrichtung gemessene Breite und/oder ihre rechtwinklig zur Aufstandsebene gemessene Höhe. Dadurch lässt sich der Gesamtstauraum größtmöglich ausbilden und der zur Verfügung stehende Zwischenraum bestmöglich nutzen. Insbesondere haben die Behältereinheiten im Querschnitt eine zumindest im Wesentlichen übereinstimmende Querschnittsform oder gar Gesamtform.

Der Abstand, den die zweite Behältereinheit in die Querrichtung von der ersten Behältereinheit hat, beträgt insbesondere mindestens 2 %, bevorzugt mindestens 5 %, und/oder insbesondere höchstens 50 %, bevorzugt höchstens 20 %, einer in die Querrichtung gemessenen Breite der ersten Behältereinheit oder der zweiten Behältereinheit. Der Abstand ist besonders bevorzugt geringer als die Breite der einzelnen Längsträger. Es hat sich gezeigt, dass dieser Abstand optimal ist, um jede üblicherweise auftretende Torsion zu tolerieren und gleichzeitig einen größtmöglichen Gesamtstauraum bereit zu stellen.

Für bestimmte Anwendungsfälle kann es sinnvoll sein, dass nur die erste und zweite, die erste und dritte oder die zweite und dritte Behältereinheit vorhanden sind. Insbesondere bei Vorhandensein nur der ersten und dritten Behältereinheit können diese weiter als vor- oder nachstehend beschrieben voneinander beabstandet sein.

Vorzugsweise macht die Summe der in die Querrichtung gemessenen Breiten der Behältereinheiten mindestens 50 %, bevorzugt mindestens 70 %, besonders bevorzugt mindestens 90 % der in die Querrichtung gemessenen Breite der Ladefläche aus. Das bedeutet, dass sich der Gesamtstauraum über einen Großteil der Breite des Zwischenraumes erstreckt. Dadurch lässt sich ein großer Gesamtstauraum erreichen, in dem Batterien mit einer besonders großen Gesamtspeicherkapazität unterzubringen sind.

Weitere Einzelheiten und Vorteile der Erfindung sind den nachfolgend beschriebenen, schematisch dargestellten Ausführungsbeispielen zu entnehmen. Es zeigen:
- Fig. 1: ein erfindungsgemäßes Nutzfahrzeug in einer perspektivischen Darstellung,
- Fig. 2: das Nutzfahrzeug schräg von unten,
- Fig. 3: die Behältereinheiten und ein Teil der Längsträger des Nutzfahrzeuges in einer perspektivischen Darstellung,
- Fig. 4: das Nutzfahrzeug in einem Querschnitt,
- Fig. 5: ein Innentragelement und zwei Außentragelemente des Nutzfahrzeugs in einer perspektivischen Darstellung,
- Fig. 6: die Behältereinheiten des Nutzfahrzeugs in einer teilweisen, perspektivischen Darstellung,
- Fig. 7: die erste Behältereinheit des Nutzfahrzeugs in einer teilweisen, perspektivischen Darstellung,
- Fig. 8: die erste Behältereinheit des Nutzfahrzeugs im montierten Zustand in einer teilweisen, perspektivischen Darstellung.

Gleich oder ähnlich wirkende Teile sind, sofern sachdienlich, mit identischen Bezugsziffern versehen. Die einzelnen technischen Merkmale der folgend beschriebenen Ausführungsform können auch mit den Merkmalen der vorbeschriebenen Ausführungsformen zur erfindungsgemäßen Weiterbildung führen.

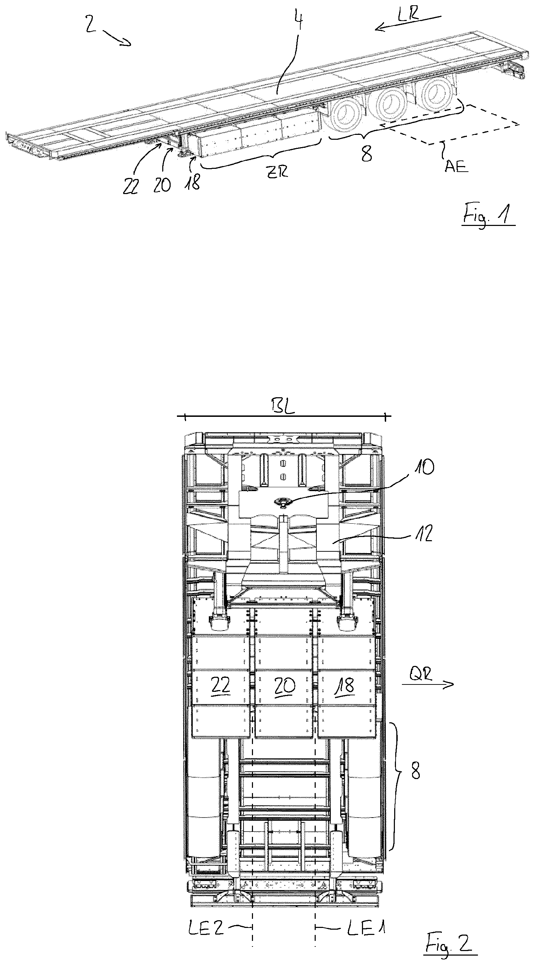

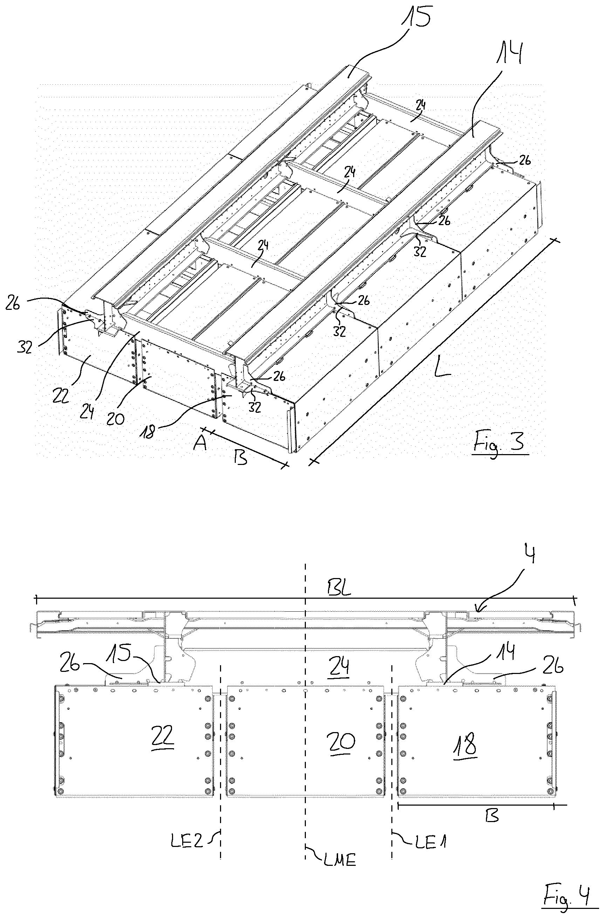

Das dargestellte Nutzfahrzeug 2 weist eine Ladefläche 4 auf, die zu einer Aufstandsebene AE, an das ein drei Achsen aufweisendes Fahrwerk 8 des Nutzfahrzeuges 2 angrenzt, parallel verläuft (vgl. Fig. 1). Bei dem Nutzfahrzeug 2 handelt es sich um ein mit einem nicht dargestellten Zugfahrzeug zu koppelndes Nutzfahrzeug 2 mit einer als Königszapfen ausgebildeten Koppeleinrichtung 10 (vgl. Fig. 2). Ein Fahrzeugrahmen 12 des Nutzfahrzeuges 2 umfasst zwei sich in eine Längsrichtung LR erstreckende und in eine Querrichtung QR voneinander beanstandete Längsträger 14, 15 (vgl. Fig. 3). In einem Zwischenraum ZR, der sich zwischen der Ladefläche 4 und der Aufstandsebene AE und in die Längsrichtung LR zwischen dem Fahrwerk 8 und der Koppeleinrichtung 10 erstreckt, sind drei jeweils einen Stauraum ausbildende Behältereinheiten 18, 20, 22 am Fahrzeugrahmen 12 angeordnet.

Die Behältereinheiten 18, 20, 22 sind im Querschnitt derart voneinander beabstandet, dass die erste Behältereinheit 18 einerseits einer ersten Längstrennebene LE1 und die zweite Behältereinheit 20 andererseits der ersten Längstrennebene LE1 angeordnet sind (vgl. Fig. 4). Analog ist die zweite Behältereinheit 20 einerseits einer zweiten Längstrennebene LE2 angeordnet, wobei die dritte Behältereinheit 22 andererseits der zweiten Längstrennebene LE2 angeordnet ist. die Längstrennebenen LE1, LE2 erstrecken sich rechtwinklig zur Aufstandsebene AE in die Längsrichtung LR. Die zweite Behältereinheit 20 ist zwischen den Längstrennebenen LE1, LE2 angeordnet, die sich beide zwischen den Längsträgern 14, 15 erstrecken.

Der Fahrzeugrahmen 12 weist insgesamt vier Innentragelemente 24 auf, an denen die zweite Behältereinheit 20 befestigt ist. Die Innentragelemente 24 sind gleich ausgebildet und in die Längsrichtung LR versetzt angeordnet. Einenends sind die Innentragelemente am Längsträger 14 angeordnet, anderenends sind die Innentragelemente 24 am Längsträger 15 angeordnet (vgl. Fig. 3 und 4).

Der Fahrzeugrahmen 12 umfasst ferner acht Außentragelemente 26. Vier der Außentragelemente 26 sind am Längsträger 14 angeordnet und erstrecken sich von Längsträger 15 weg. An diesen vier Außentragelementen 26 ist die erste Behältereinheit 18 angeordnet. Bezogen auf eine Längsmittelebene LME spiegelsymmetrisch angeordnet sind weitere vier Außentragelemente 26 am Längsträger 15, an denen die dritte Behältereinheit 22 befestigt ist.

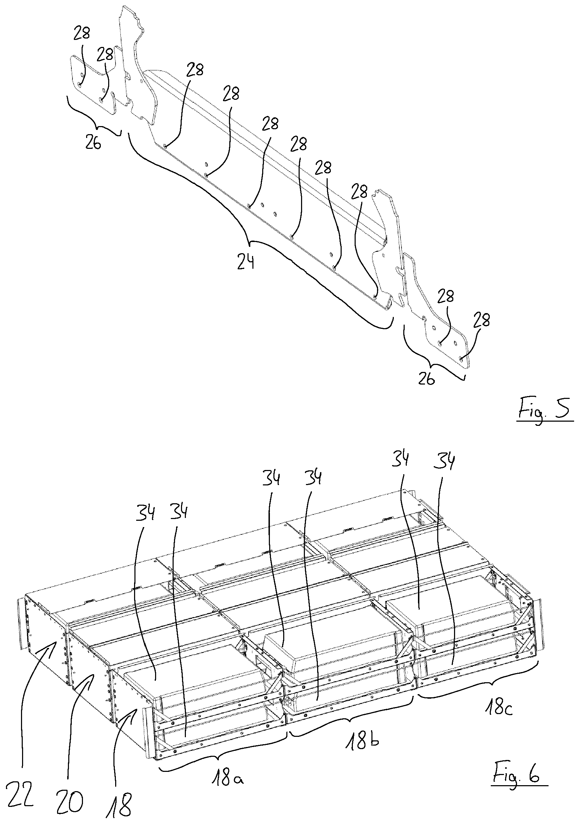

Die Außentragelemente 26 und die Innentragelemente 24 erstrecken sich überwiegend flächig rechtwinklig zur Aufstandsebene AE in die Querrichtung QR. Die Außentragelemente 26 und die Innentragelemente 24 sind an einem Teil der Längsträger 14, 15 angeordnet, der sich flächig rechtwinklig zur Aufstandsebene AE und in die Längsrichtung LR erstreckt. Die Außentragelemente 26 und die Innentragelemente 24 weisen jeweils eine Mehrzahl von sich in die Längsrichtung LR erstreckenden Bohrungen 28 auf (vgl. Fig. 5). Die Behältereinheiten 18, 20, 22 sind mittels durch die Bohrungen 28 reichenden, nicht dargestellten, Befestigungselementen am Fahrzeugrahmen 12 befestigt. Der Fahrzeugrahmen 12 weist mehrere Stützelemente 32 auf, die jeweils eines der Außentragelemente 26 mit ihrem jeweiligen Längsträger 14, 15 verbinden und sich im Wesentlichen flächig parallel zur Aufstandseben AE erstrecken.

Die Behältereinheiten 18, 20, 22 haben im Wesentlichen die gleiche Form. Die Behältereinheiten 18, 20, 22 sind quaderförmig ausgebildet, wobei ihre in die Längsrichtung LR gemessenen Längen L mindestens dreimal so groß sind, wie ihre in die Querrichtung gemessenen Breiten B (vgl. Fig. 3). Ein Abstand A, den die zweite Behältereinheit 20 in die Querrichtung QR von der ersten Behältereinheit 18 hat, beträgt mindestens 5 % und höchstens 50 % der in die Querrichtung QR gemessenen Breite B der ersten Behältereinheit 18. Die somit der in die Querrichtung QR gemessenen, kumulierten Breiten B der Behältereinheiten 18, 20, 22 macht mindestens 90 % der in die Querrichtung QR gemessenen Breite BL der Ladefläche 4 aus.

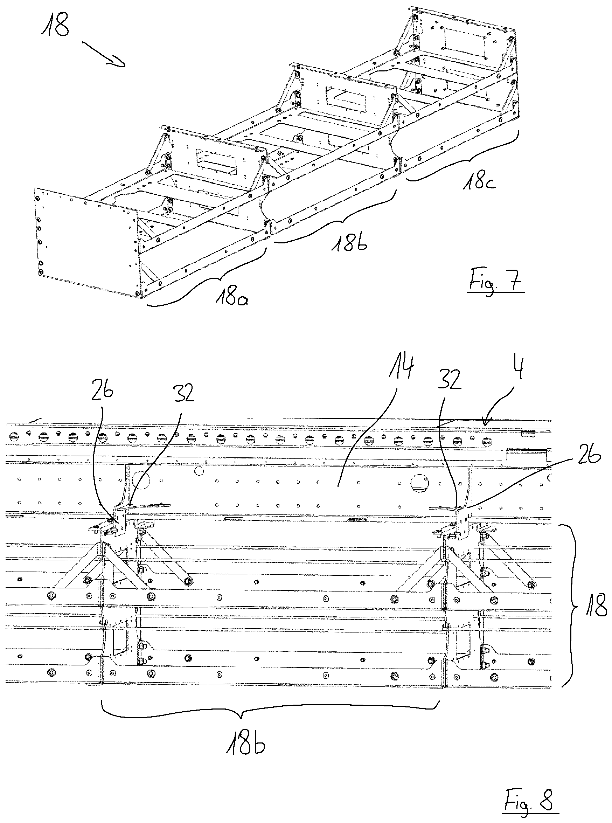

Fig. 6 zeigt die Behältereinheit 18 in einer teilweisen Darstellung. Wie die weiteren Behältereinheiten 20, 22 umfasst die erste Behältereinheit 18 drei in die Längsrichtung LR versetzte Sektionen 18a, 18b, 18c, die jeweils einen Zwischenboden aufweisen. In jeder der Sektionen 18a, 18b, 18c sind zwei Batteriepakete 34 angeordnet. Die Fig. 7 und 8 veranschaulichen den Aufbau der ersten Behältereinheit 18 sowie ihre Befestigung.

## Patentansprüche

1. Nutzfahrzeug (2) mit einer Ladefläche (4), einem an eine Aufstandsebene (AE) angrenzenden Fahrwerk (8), einer zur Kopplung des Nutzfahrzeuges (2) mit einem Zugfahrzeug ausgebildeten Koppeleinrichtung (10), einem Fahrzeugrahmen (12), der zumindest einen sich in eine Längsrichtung (LR) erstreckenden Längsträger aufweist, und einer ersten einen Stauraum ausbildenden Behältereinheit (18), die in einem Zwischenraum (ZR), der sich zwischen der Ladefläche (4) und der Aufstandsebene (AE) und in die Längsrichtung (LR) versetzt zum Fahrwerk (8) erstreckt, am Fahrzeugrahmen (12) angeordnet ist,
**gekennzeichnet durch** zumindest eine zweite einen Stauraum ausbildende Behältereinheit (20), die im Zwischenraum (ZR) am Fahrzeugrahmen (12) angeordnet ist und zumindest in einem Querschnitt von der ersten Behältereinheit (18) beabstandet ist.

2. Nutzfahrzeug nach Anspruch 1, **dadurch gekennzeichnet, dass** die erste Behältereinheit (18) einerseits einer ersten Längstrennebene (LE1) angeordnet ist, die sich rechtwinklig zur Aufstandsebene (AE) und in die Längsrichtung (LR) erstreckt, und die zweite Behältereinheit (20) andererseits der ersten Längstrennebene (LE1) angeordnet ist.

3. Nutzfahrzeug nach Anspruch 1 oder 2, **dadurch gekennzeichnet, dass** der Fahrzeugrahmen (12) zumindest zwei sich in die Längsrichtung (LR) erstreckende und in eine Querrichtung (QR) voneinander beabstandete Längsträger (14,15) aufweist.

4. Nutzfahrzeug nach den Ansprüchen 2 und 3, **dadurch gekennzeichnet, dass** die zweite Behältereinheit (20) zwischen der ersten Längstrennebene (LE1) und einer zweiten Längstrennebene (LE2), die sich zur ersten Längstrennebene (LE1) parallel erstreckt, angeordnet ist, wobei die erste Längstrennebene (LE1) und die zweite Längstrennebene (LE2) sich zwischen den beiden Längsträgern (14,15) erstrecken.

5. Nutzfahrzeug nach einem der vorhergehenden Ansprüche unter Einschluss von Anspruch 3, **dadurch gekennzeichnet, dass** der Fahrzeugrahmen (12) zumindest ein einenends an einem ersten der beiden Längsträger (14) angeordnetes und anderenends an einem zweiten der beiden Längsträger (15) angeordnetes Innentragelement (24) aufweist, an dem zumindest die zweite Behältereinheit (20) befestigt ist.

6. Nutzfahrzeug nach Anspruch 5, **dadurch gekennzeichnet, dass** an dem Innentragelement (24) die erste Behältereinheit (18) zumindest teilweise befestigt ist.

7. Nutzfahrzeug nach einem der vorhergehenden Ansprüche unter Einschluss von Anspruch 3, **dadurch gekennzeichnet, dass** der Fahrzeugrahmen (12) zumindest ein an einem/dem ersten der beiden Längsträger (14) angeordnetes und sich von einem/dem zweiten der beiden Längsträger (15) wegerstreckendes Außentragelement (26) aufweist, an dem die erste Behältereinheit (18) befestigt ist.

8. Nutzfahrzeug nach einem der Ansprüche 5 bis 7, **dadurch gekennzeichnet, dass** das Außentragelement (26) und/oder das Innentragelement (24) sich zumindest überwiegend flächig rechtwinklig zur Aufstandsebene (AE) und in eine/die Querrichtung (QR) erstrecken/erstreckt.

9. Nutzfahrzeug nach einem der Ansprüche 5 bis 8, **dadurch gekennzeichnet, dass** das Außentragelement (26) und/oder das Innentragelement (24) zumindest hauptsächlich an einem sich flächig rechtwinklig zur Aufstandsebene (AE) und in die Längsrichtung (LR) erstreckenden Teil des/der Längsträger(s) (14,15) angeordnet sind/ist.

10. Nutzfahrzeug nach einem der Ansprüche 5 bis 9, **dadurch gekennzeichnet, dass** das Außentragelement (26) und/oder das Innentragelement (24) zumindest eine in die Längsrichtung (LR) durchgehende Bohrung (28) aufweisen/aufweist, wobei die erste bzw. zweite Behältereinheit (18,20) mittels eines durch die Bohrung (28) reichenden Befestigungselementes befestigt ist.

11. Nutzfahrzeug nach einem der Ansprüche 5 bis 10, **dadurch gekennzeichnet, dass** der Fahrzeugrahmen (12) zumindest ein das Außentragelement (26) und/oder das Innentragelement (24) mit dem ersten der beiden Längsträger (14) verbindendes Stützelement (32) aufweist, das sich zumindest im Wesentlichen flächig parallel zur Aufstandsebene (AE) erstreckt.

12. Nutzfahrzeug nach einem der Ansprüche 5 bis 11, **dadurch gekennzeichnet, dass** der Fahrzeugrahmen (12) mindestens zwei, bevorzugt mindestens drei, besonders bevorzugt mindestens vier, in die Längsrichtung (LR) versetzt angeordnete Innentragelemente (24) und/oder Außentragelemente (26) aufweist.

13. Nutzfahrzeug nach einem der vorhergehenden Ansprüche, **gekennzeichnet durch** eine dritte einen Stauraum ausbildende Behältereinheit (22), die bezogen auf eine Längsmittelebene (LME), die sich rechtwinklig zur Aufstandsebene (AE) und in die Längsrichtung (LR) erstreckt und die Ladefläche (4) mittig schneidet, spiegelsymmetrisch zur ersten Behältereinheit (18) angeordnet ist.

14. Nutzfahrzeug nach einem der vorhergehenden Ansprüche, **dadurch gekennzeichnet, dass** die erste Behältereinheit (18) und/oder die zweite Behältereinheit (20) und/oder insbesondere die dritte Behältereinheit (22) quaderförmig ausgebildet sind/ist, wobei ihre in die Längsrichtung (LR) gemessene(n) Länge(n) (L) mindestens so groß, bevorzugt mindestens doppelt so groß, besonders bevorzugt mindestens dreifach so groß, sind/ist wie ihre in eine/die Querrichtung (QR) gemessene(n) Breite(n) (B).

15. Nutzfahrzeug nach einem der vorhergehenden Ansprüche, **dadurch gekennzeichnet, dass** der Abstand (A), den die zweite Behältereinheit (20) in eine/die Querrichtung (QR) von der ersten Behältereinheit (18) hat, mindestens 2 %, bevorzugt mindestens 5 %, und/oder höchstens 50 %, bevorzugt höchstens 20 %, einer in die Querrichtung (QR) gemessenen Breite (B) der ersten Behältereinheit (18) und/oder der zweiten Behältereinheit (20) beträgt.

16. Nutzfahrzeug nach einem der vorhergehenden Ansprüche, **dadurch gekennzeichnet, dass** die Summe der in eine/die Querrichtung (QR) gemessenen Breiten (B) der Behältereinheiten (18,20,22) mindestens 50 %, bevorzugt mindestens 70 %, besonders bevorzugt mindestens 90 % der in die Querrichtung (QR) gemessenen Breite (BL) der Ladefläche (4) ausmacht.
